(19) Europäisches Patentamt
European Patent Office
Office européen des brevets

(11) EP 4 606 828 A1

(12) EUROPEAN PATENT APPLICATION
published in accordance with Art. 153(4) EPC

(43) Date of publication:
**27.08.2025 Bulletin 2025/35**

(21) Application number: **23880285.4**

(22) Date of filing: **20.10.2023**

(51) International Patent Classification (IPC):
***C08F 228/02*** (2006.01) ***C08F 220/24*** (2006.01)
***C08F 220/06*** (2006.01) ***C08F 220/18*** (2006.01)
***C08F 220/44*** (2006.01) ***C08F 220/56*** (2006.01)
***C08F 212/08*** (2006.01) ***C08L 41/00*** (2006.01)
***C08K 3/013*** (2018.01) ***H01M 50/446*** (2021.01)

(52) Cooperative Patent Classification (CPC):
**C08F 212/08; C08F 220/06; C08F 220/18; C08F 220/24; C08F 220/44; C08F 220/56; C08F 228/02; C08K 3/013; C08L 41/00; H01M 50/446;** Y02E 60/10

(86) International application number:
**PCT/KR2023/016336**

(87) International publication number:
**WO 2024/085710 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2022 KR 20220136478**

(71) Applicant: **Hansol Chemical Co., Ltd**
**Seoul 06169 (KR)**

(72) Inventors:
- **KIM, Jin-Yeong**
  **Wanju-gun, Jeollabuk-do 55321 (KR)**
- **KIM, Young-Su**
  **Wanju-gun, Jeollabuk-do 55321 (KR)**
- **NOH, Myeong-Jun**
  **Wanju-gun, Jeollabuk-do 55321 (KR)**
- **JANG, Bo-Ok**
  **Wanju-gun, Jeollabuk-do 55321 (KR)**
- **LEE, Nam-Joo**
  **Wanju-gun, Jeollabuk-do 55321 (KR)**
- **LEE, Go-Eun**
  **Wanju-gun, Jeollabuk-do 55321 (KR)**
- **CHO, Seung-Wan**
  **Wanju-gun, Jeollabuk-do 55321 (KR)**
- **OH, Sae-Wook**
  **Wanju-gun, Jeollabuk-do 55321 (KR)**
- **KWON, Se-Man**
  **Wanju-gun, Jeollabuk-do 55321 (KR)**

(74) Representative: **Ipsilon Lyon**
**Le Contemporain**
**50 Chemin de la Bruyère**
**69574 Dardilly Cedex (FR)**

# (54) COPOLYMER FOR SEPARATOR AND SECONDARY BATTERY COMPRISING SAME

(57) The present invention relates to: a copolymer comprising, with respect to 100 wt% of the total weight of the copolymer, 3 wt% to 30 wt% of a monomer unit that contains a sulfide group, a monomer unit that contains a sulfonate group, a monomer unit that contains a sulfonic group, a monomer unit that contains a fluorine group, a monomer unit that contains a perfluoroalkyl group, or a combination thereof, a slurry composition containing same; a separator; and a secondary battery.

EP 4 606 828 A1

## Description

### Technical Field

The present disclosure relates to a copolymer, a slurry composition containing the same, a separator, and a secondary battery.

### Background Art

With high energy density, lithium secondary batteries are being used extensively in the fields of electrical, electronic, telecommunication, and computer industries. Furthermore, application fields of lithium secondary batteries are being expanded to high-capacity secondary batteries for hybrid vehicles, electric vehicles, and the like, in addition to small lithium secondary batteries for portable electronic devices.

Although the insulation of lithium secondary batteries is enabled by separators, internal or external battery abnormalities or impacts cause a short circuit between positive and negative electrodes, which may lead to heat generation and explosion. Thus, ensuring the thermal and chemical safety of separators is extremely important.

Currently, polyolefin-based films are being used widely as separators, but polyolefins have the disadvantages of severe thermal shrinkage at high temperatures and poor mechanical properties.

To improve the stability of such polyolefin-based separators, a porous separator in which a polyolefin porous substrate film is coated with a mixture composed of inorganic particles and a binder has been developed.

In other words, to suppress battery instability caused by dendrites and thermal shrinkage of polyolefin-based separators caused by high temperatures, one or both sides of the porous separator substrate are coated with the inorganic particles also in combination with the binder. Accordingly, the inorganic particles can impart the function of suppressing the shrinkage rate of the substrate. At the same time, a further safe separator can be manufactured by the coating layer.

To obtain excellent battery characteristics, the coating layer is required not only to be evenly coated but also to have strong adhesion to the substrate. In particular, on this basis, improvement in the performance and stability of secondary batteries is required.

[Documents of related art]

[Patent Documents]

(Patent Document 1) Korean Patent No. 10-1430975
(Patent Document 2) Korean Patent Application Publication No. 10-2006-0072065

### Disclosure

### Technical Problem

Accordingly, the present disclosure aims to provide a slurry composition with excellent adhesion of inorganic materials and electrodes to a porous substrate using a copolymer.

In addition, the present disclosure aims to provide a separator with excellent adhesion and electrical properties with the application of the slurry composition and a battery with excellent performance with the use of the separator.

However, the problems to be solved by the present application are not limited to the above description, and other problems can be clearly understood by those skilled in the art from the following description.

### Technical Solution

In one aspect of the present application, a copolymer including, with respect to 100 wt% of the total weight of the copolymer, 3 wt% or more and 30 wt% or less of a sulfide group-containing monomer unit, a sulfonate group-containing monomer unit, a sulfone group-containing monomer unit, a fluoro group-containing monomer unit, a perfluoroalkyl group-containing monomer unit, or a combination thereof
is provided.

In another aspect of the present application, a slurry composition including the copolymer and

inorganic particles

is provided.

In a further aspect of the present application, a separator including the slurry composition is provided.

In yet another aspect of the present application, a secondary battery including the separator is provided.

**Advantageous Effects**

A copolymer of the present disclosure can improve the adhesion of inorganic materials and electrodes to a separator substrate and can improve the heat-resistant properties of a separator by increasing the content of the inorganic materials through high adhesion.

In addition, such improved adhesion can minimize possible failure rates during battery assembly and pore formation.

Furthermore, excellent properties such as air permeability and electrical resistance can be imparted to improve the ionic conductivity in an electrolyte, reaction stability, and life characteristics of a battery.

**Best Mode**

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Prior to discussing the details, it should be noted that all terms or words used herein and used in the appended claims are not construed as being limited to general and dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular forms are intended to include the plural forms as well, unless the context clearly indicates otherwise. It will be further understood that the terms "comprise," "include," "have," and the like when used herein, specify the presence of stated features, integers, steps, constituent elements, or combinations thereof but do not preclude the presence or addition of one or more other features, integers, steps, constituent elements, or combinations thereof.

As used herein, the expression "a to b" to represent a numerical range is defined as $\geq$ a and $\leq$ b.

A copolymer, according to one aspect of the present application, may include, with respect to 100 wt% of the total weight of the copolymer, 3 wt% or more and 30 wt% or less of a sulfide group-containing monomer unit, a sulfonate group-containing monomer unit, a sulfone group-containing monomer unit, a fluoro group-containing monomer unit, a perfluoroalkyl group-containing monomer unit, or a combination thereof.

The sulfide group-, sulfonate group-, or sulfone group-containing monomer unit may, for example, be a monomer unit containing a sulfide group, sulfonate group, sulfone group, sulfonylester group, sulfonamide group, sulfonimide group, sulfonylazide group, sulfonylhydrazide group, sulfonylaziridine group, sulfonylazetidine group, sulfonylcarbamate group, sulfonylurea group, or sulfonylhalide group, but there are no limitations.

The sulfide group-containing monomer unit, the sulfonate group-containing monomer unit, the sulfone group-containing monomer unit, the fluoro group-containing monomer unit, the perfluoroalkyl group-containing monomer unit, or a combination thereof may have a large dipole moment.

In one covalent bond, electrons are attracted further toward the more electronegative of the two atoms, where the atom with relatively high electronegativity has a (-) charge, and the atom with low electronegativity has a (+) charge. This is called a dipole, and the magnitude thereof is called the dipole moment.

In the meantime, copolymers including monomer units with large dipole moments may induce polarization and thus allow the electrostatic attraction of inorganic materials to porous substrates or electrodes to be exhibited, resulting in improved adhesion.

When the content of the sulfide group-containing monomer unit, the sulfonate group-containing monomer unit, the sulfone group-containing monomer unit, the fluoro group-containing monomer unit, the perfluoroalkyl group-containing monomer unit, or a combination thereof, with a large dipole moment, falls short of the above numerical range of the present application, adhesion may become poor, leading to deterioration in the properties of a separator.

When the content of the sulfide group-containing monomer unit, the sulfonate group-containing monomer unit,

the sulfone group-containing monomer unit, the fluoro group-containing monomer unit, the perfluoroalkyl group-containing monomer unit, or a combination thereof, with a large dipole moment, exceeds the above numerical range of the present application, reaction stability may become poor, leading to deterioration in the properties of a separator.

In one embodiment, the copolymer may further include an acrylonitrile-based monomer unit, an acrylate-based monomer unit, an acrylic acid-based monomer unit, a vinyl acetate-based monomer unit, and a styrene-based monomer unit.

In one embodiment, the copolymer may include, with respect to 100 wt% of the total weight of the copolymer, 3 wt% or more and 15 wt% or less of the acrylonitrile-based monomer unit, 40 wt% or more and 70 wt% or less of the acrylate-based monomer unit, 1 wt% or more and 10 wt% or less of the acrylic acid-based monomer unit, 1 wt% or more and 15 wt% or less of the vinyl acetate-based monomer unit, and 10 wt% or more and 30 wt% or less of the styrene-based monomer unit.

When the content of the acrylonitrile-based monomer unit exceeds or falls short of the above numerical range of the present application, this may lead to deterioration in the dispersibility of polymer particles and the dispersibility of an inorganic slurry or may lead to deterioration in adhesion.

When the content of the acrylate-based monomer unit exceeds or falls short of the above numerical range of the present application, this may lead to deterioration in adhesion.

When the content of the acrylic acid-based monomer unit exceeds or falls short of the above numerical range of the present application, this may lead to aggregation and precipitation of polymers or may lead to deterioration in adhesion.

When the content of the vinyl acetate-based monomer unit exceeds or falls short of the above numerical range of the present application, this may cause problems regarding stability, such as stability and storage stability.

When the content of the styrene-based monomer unit exceeds or falls short of the above numerical range of the present application, this may lead to deterioration in wettability or may lead to deterioration in adhesion.

In one embodiment, the acrylate-based monomer unit may be formed by polymerization of one or more selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate.

In addition, the acrylic acid-based monomer unit may be formed by polymerization of one or more selected from the group consisting of, for example, acrylic acid and methacrylic acid.

In the meantime, the acrylonitrile-based monomer unit may be formed by polymerization of one or more selected from the group consisting of acrylonitrile and methacrylonitrile.

In addition, the vinyl acetate-based monomer unit and the styrene-based monomer unit may be formed by polymerization of vinyl acetate and styrene, respectively.

In one embodiment, the sulfonate group-containing monomer unit may be formed by polymerization of sodium vinyl sulfonate, and the perfluoroalkyl group-containing monomer unit may be formed by polymerization of one or more selected from the group consisting of 2-(perfluorooctyl)ethyl acrylate and 2-(perfluorooctyl)ethyl methacrylate.

In one embodiment, the acrylic acid-based monomer unit may be bonded to an alkali metal.

In other words, the carboxylate group in the acrylic acid-based monomer unit may be bonded to the alkali metal.

In the meantime, a weight ratio of the alkali metal to the copolymer (weight of one or more selected from the group consisting of the alkali metal and an alkali metal-containing acetate salt compound:weight of the copolymer) may be in the range of 0.1 to 15:100.

For example, the weight ratio of the alkali metal to the copolymer may be in the range of 1 to 10:100.

When the weight ratio of the alkali metal to the copolymer is higher or lower than the above weight ratio of the present application, the adhesion properties and heat-resistant properties of a separator may become poor. In particular, this separator may have poor peel adhesion and adhesion to electrodes.

The adhesion of a separator containing the alkali metal may be determined by strength, such as the cohesion and repulsion between elements.

In the copolymer of the present application, shifts in the relative balance of cohesion, adhesion, and repulsion among elements may occur depending on the content of the alkali metal, resulting in changes in adhesion to inorganic materials or electrodes.

The use of the alkali metal in the preparation of the copolymer for a binder may improve the overall adhesion by the combination of adhesion and cohesion due to an increase in cohesion between elements, but the addition thereof in excessive amounts may lead to deterioration in the overall adhesion with a decrease in cohesion.

In the meantime, improvement in the adhesion of the copolymer to inorganic materials means an increase in adhesion between the inorganic materials and a substrate, which may, in turn, mean that the heat-resistant properties of a separator can be improved by increased amounts of the inorganic materials.

The adhesion of a separator to electrodes may reduce possible failure rates when loading electrodes during battery assembly while minimizing pore formation and improving the ionic conductivity in an electrolyte.

In addition, a single coating of a binder layer on the upper portion of an inorganic coating layer may maximize adhesion to electrodes, which may ultimately minimize battery failure rates and further improve battery performance.
In one embodiment, the copolymer may include a monomer repeating unit represented by Formula 1 below.

[Formula 1]

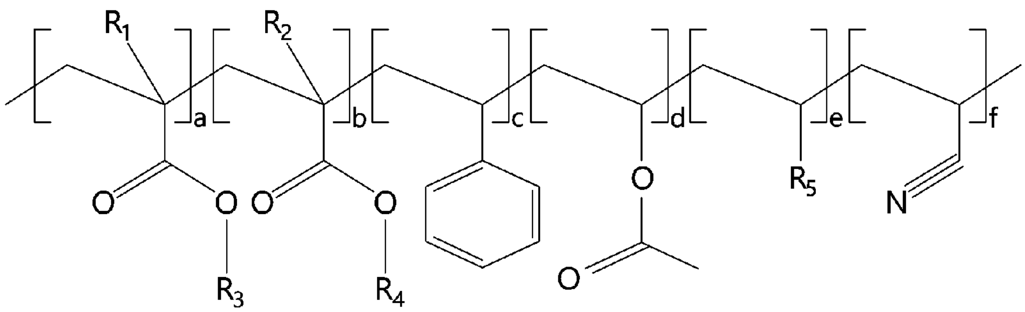

In Formula 1, $R_1$ and $R_2$ may each independently be hydrogen, a straight-chain or branched-chain hydrocarbon having 1 to 4 carbon atoms, or a combination thereof, $R_3$ may be a straight-chain or branched-chain hydrocarbon having 1 to 20 carbon atoms and containing one or more fluorine atoms, $R_4$ may be hydrogen, an alkali metal, or a straight-chain or branched-chain hydrocarbon having 1 to 20 carbon atoms, $R_5$ may be a sulfide group, a sulfonate group, a sulfone group, a sulfonylester group, a sulfonamide group, a sulfonimide group, a sulfonylazide group, a sulfonylhydrazide group, a sulfonylaziridine group, a sulfonylazetidine group, a sulfonylcarbamate group, a sulfonylurea group, a sulfonylhalide group, or a combination thereof, and a + b + c + d + e + f = 1.
However, a + e may be 0.03 or more and 0.3 or less.
In Formula 1, a, b, c, d, e, and f correspond to the weight fractions of the respective monomer units, and the sum of the weight fractions of the respective monomer units is 1.
The alkali metal may be Li, Na, or K, but there are no limitations.
In one embodiment, $R_1$ and $R_2$ may each independently be one or more selected from the group consisting of hydrogen and methyl, and $R_4$ may be one or more selected from the group consisting of hydrogen, methyl, ethyl, propyl, isopropyl, butyl, sec-butyl, tert-butyl, ethyl hexyl, n-pentyl, n-hexyl, n-heptyl, n-octyl, 2-ethyl hexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoicosyl, isohenicosyl, and isodocosyl.
In one example, the copolymer may be a random or block copolymer depending on a synthesis process.
In one example, the copolymer may have a number average molecular weight in the range of 10,000 to 1,000,000.
When the number average molecular weight of the copolymer is smaller than 10,000, the fluidity of the copolymer may increase, thus leading to deterioration in dispersibility and deterioration in heat-resistant properties of a separator. When the number average molecular weight is greater than 1,000,000, the viscosity may be excessively high for use, and the pores of a separator may be blocked, so the air permeability and resistance may become poor.
A slurry composition, according to another aspect of the present application, may include the copolymer and inorganic particles.
As the inorganic particles, any insulator particles are usable without limitations.
Specific examples of the inorganic particles may include $Al_2O_3$, AlOOH, $SiO_2$, $TiO_2$, $ZrO_2$, ZnO, NiO, CaO, $SnO_2$, $Y_2O_3$, MgO, $BaTiO_3$, $CaTiO_3$, $SrTiO_3$, SiC, $Li_3PO_4$, $Pb(Zr,Ti)O_3$(PZT), $(Pb,La)(Zr,Ti)O_3$(PLZT), and mixtures thereof.
The inorganic particles are not particularly limited in size, but the median particle diameter thereof may be, for example, in the range of 0.01 $\mu$m to 30 $\mu$m and is more preferably in the range of 0.1 $\mu$m to 10 $\mu$m. When the median particle diameter of the inorganic particles is smaller than the above preferable range, dispersibility may become poor. When the median particle diameter exceeds the above preferable range, the thickness of the coating layer may be increased after coating, leading to deterioration in mechanical properties.
In addition, the inorganic particles are not particularly limited in form but may have, for example, a spherical, platy, elliptical, or irregular form.
A separator, according to a further aspect of the present application, may include the slurry composition.
The separator may be manufactured by coating at least one side of a porous substrate film with the above-described slurry composition or by forming the slurry composition into a film form and laminating such a formed film to the

porous substrate film.

In the meantime, the separator may be used as a separator for a secondary battery, which is, for example, a separator for a lithium secondary battery.

One example of manufacturing the separator may include: Step (a) of preparing a polymer solution by dissolving or dispersing the copolymer in a solvent; Step (b) of adding inorganic particles to the polymer solution obtained in Step (a), followed by mixing; and Step (c) of coating one or more regions selected from the group consisting of the surface of a polyolefin-based separator substrate and some pores of the substrate with the mixture obtained in Step (b), followed by drying.

First, 1) a polymer solution having a form in which the copolymer is dissolved or dispersed in an appropriate solvent is produced and prepared.

As the solvent, those having a solubility index similar to that of the copolymer, serving as a binder, and having a low boiling point are preferably used. This is to facilitate uniform mixing and the removal of the solvent later. Non-limiting examples of the solvents usable may include acetone, tetrahydrofuran, methylene chloride, chloroform, dimethylformamide, N-methyl-2-pyrrolidone (NMP), cyclohexane, water, or mixtures thereof. More preferably, the solvent is used in a water-dispersed state.

2) The inorganic particles are added to the prepared polymer solution and dispersed to prepare the mixture of the inorganic particles and the polymer.

Preferably, a process of dispersing the polymer solution and the inorganic particles is performed, in which case, the dispersion time may be appropriately in the range of 0.1 to 24 hours. While typical methods are usable for the dispersion, a ball milling method is particularly preferable.

The mixture composed of the inorganic particles and the polymer is not particularly limited in composition, but the thickness, pore size, and porosity of the organic/inorganic composite porous separator of the present disclosure, to be finally manufactured, may be controlled thereby.

In other words, the higher the ratio (I/P) of the inorganic particles (I) to the polymer (P), the higher the porosity of the separator, which results in an increase in the thickness of the separator at the same solid content (total weight of the inorganic particles and the polymer). In addition, pores are more likely to be formed between the inorganic particles, so the pore size is larger. In this case, the larger the inorganic particle size (particle diameter), the greater the interstitial distance between the inorganic materials, resulting in a larger pore size.

3) The upper portion of the prepared polyolefin-based separator substrate is coated with the prepared mixture of the inorganic particles and the polymer and then dried, thereby obtaining the separator of the present disclosure.

In this case, typical coating methods known in the art may be used for coating the upper portion of the polyolefin-based separator substrate with the mixture of the inorganic particles and the polymer. For example, various methods, such as dip coating, die coating, roll coating, comma coating, or combinations thereof, may be used. In addition, when coating the upper portion of the polyolefin-based separator substrate with the mixture of the inorganic particles and the polymer, the coating may be performed on both sides of the separator substrate or may be selectively performed on only one side.

When using the separator in a secondary battery, lithium ions may be transferred not only via the separator substrate but also via a porous active layer. In addition, in the case where an external impact causes an internal short circuit, the above-described safety improvement effect can be exhibited.

In addition, the secondary battery may include a positive electrode, a negative electrode, the separator interposed between the positive and negative electrodes, and an electrolyte.

The secondary battery may be manufactured by typical methods known in the art. As one example thereof, the secondary battery is manufactured by interposing the separator between the electrodes to obtain an assembly and then injecting the electrolyte into the assembly.

The electrodes to be used in combination with the separator are not particularly limited. However, typical positive electrode active materials usable in positive electrodes of secondary batteries may be used as a positive electrode active material, and non-limiting examples thereof may include lithium intercalation materials, such as lithium manganese oxide (lithiated manganese oxide), lithium cobalt oxide (lithiated cobalt oxide), lithium nickel oxide (lithiated nickel oxide), or a composite oxide formed by combinations thereof. In addition, typical negative electrode active materials usable in negative electrodes of existing electrochemical devices may be used as a negative electrode active material, and non-limiting examples thereof may include lithium metal or lithium alloys and lithium intercalation material, such as carbon, petroleum coke, activated carbon, graphite, or other carbon-based materials. Both the electrodes are configured in such forms that the above-described positive and negative electrode active materials are bound to a positive electrode current collector, that is, a foil made of aluminum, nickel, or a combination thereof, and a negative electrode current collector, that is, a foil made of copper, gold, nickel, copper alloys, or a combination thereof, respectively.

The electrolyte preferably has a form in which a salt having a structure such as A+B-, including alkali metal cations, such as Li+, Na+, and K+, or ions composed of combinations thereof as A+ and anions, such as $PF_6$-, $BF_4$-, Cl-, Br-, I-, $ClO_4$-, $AsF_6$-, $CH_3CO_2$-, $CF_3SO_3$-, $N(CF_3SO_2)_2$-, and $C(CF_2SO_2)_3$-, or ions composed of combinations thereof as B-, is dissolved and dissociated in an organic solvent composed of propylene carbonate (PC), ethylene carbonate (EC),

diethyl carbonate (DEC), dimethyl carbonate (DMC), dipropyl carbonate (DPC), dimethyl sulfoxide, acetonitrile, dimethoxyethane, diethoxyethane, tetrahydrofuran, NMP, ethyl methyl carbonate (EMC), gamma-butyrolactone (GBL), or a mixture thereof.

In addition to a typical winding process, a process in which the separator and the electrodes are stacked and folded is usable as a process of applying the separator to the battery.

**Mode for Invention**

Hereinafter, the present application will be described in more detail using examples, but the present application is not limited thereto.

[Preparation Example 1] Preparation of Copolymer

Into the reaction vessel, 260 parts by weight of distilled water, some parts by weight of a monomer mixture, and 0.1 to 5 parts by weight of an emulsifier with respect to 100 parts by weight of the monomer mixture were modified and introduced, followed by injecting high-purity nitrogen gas while raising the temperature to 70°C with stirring. To the reaction vessel prepared at 70°C, the remaining parts by weight of the monomer mixture and 0.15 parts by weight of ammonium persulfate, serving as a degradable initiator, with respect to 100 parts by weight of the monomer mixture were successively added, respectively, to conduct a polymerization reaction, thereby preparing a copolymer.

To the copolymer prepared by the above polymerization reaction (emulsion polymerization reaction), an aqueous solution of metal hydroxide (NaOH, LiOH, and KOH) was added, thereby preparing a neutralized copolymer.

[Preparation Example 2] Preparation of Slurry for Coating Porous Film

Inorganic particles [alumina (an average particle diameter of 0.5 μm) or boehmite (an average particle diameter of 0.7 μm)] and the copolymer for a binder, prepared by Preparation Example 1, were mixed to achieve a solid content weight ratio of 80:20, followed by adding and mixing distilled water to adjust the solid content concentration to 35%. The resulting mixture was sufficiently dispersed using a ball milling method or mechanical stirrer, thereby preparing a slurry.

[Preparation Example 3] Preparation of Separator

The slurry for coating a porous film, prepared by Preparation Example 2, was applied on a polyolefin porous substrate (polyethylene (PE), polypropylene (PP), and the like), thereby forming an inorganic coating layer. As for the coating method, various methods, such as dip coating, die coating, gravure coating, comma coating, and the like, are applicable.

In addition, after the coating, the resulting coating layer was dried by methods involving warm air, hot air, vacuum drying, infrared drying, and the like. The drying was performed in a temperature range of 50°C to 80°C.

The inorganic coating layer had a thickness in the range of 1 to 6 μm on one or both sides. When the thickness is smaller than 1 μm, there is a problem in that the heat resistance of the separator becomes significantly poor. When the thickness exceeds 6 μm, the separator has an extremely large thickness, which could lead to decreased battery energy density and increased battery resistance.

[Example and Comparative Example]

In Examples 1 to 5 and Comparative Examples 1 and 2, copolymers were prepared according to Preparation Example 1 by adjusting the contents of monomers, as shown in Table 1 below. Such prepared copolymers were used to prepare slurries for coating porous films, according to Preparation Example 2, and separators, according to Preparation Example 3.

[Table 1]

| | Copolymer monomers and content (wt%) | | | | | | |
|---|---|---|---|---|---|---|---|
| | AN | BA | ST | MAA | VAc | Na-VS | FA |
| Example 1 | 6 | 61 | 16 | 4 | 8 | 5 | - |
| Example 2 | 6 | 56 | 16 | 4 | 8 | 10 | - |
| Example 3 | 6 | 46 | 16 | 4 | 8 | 20 | - |

(continued)

| | Copolymer monomers and content (wt%) | | | | | | |
|---|---|---|---|---|---|---|---|
| | AN | BA | ST | MAA | VAc | Na-VS | FA |
| Example 4 | 6 | 56 | 16 | 4 | 8 | - | 10 |
| Example 5 | 6 | 46 | 16 | 4 | 8 | - | 20 |
| Comparative Example 1 | 6 | 66 | 16 | 4 | 8 | - | - |
| Comparative Example 2 | 6 | 46 | 36 | 4 | 8 | - | - |

In terms of the monomers shown in Table 1, AN indicates acrylonitrile, BA indicates butyl acrylate, ST indicates styrene, MAA indicates methacrylic acid, VAc indicates vinyl acetate, Na-VS indicates sodium vinyl sulfonate, and FA indicates 2-(perfluorooctyl)ethyl acrylate.

Na-VS and FA correspond to monomers with large dipole moments due to containing atoms with high electronegativity.

[Evaluation Example 1] Adhesion (Peel Adhesion) of Slurry for Coating Porous Film

Specimens were prepared by applying a tape with dimensions of 18 mm in width and 30 mm or more in length on the separators, manufactured according to Preparation Example 3 using the binder copolymers of Examples 1 to 5 and Comparative Examples 1 and 2, and then pressing the tape lightly using a hand roller five times.

Such manufactured specimen was mounted on a universal testing machine (UTM) (1 kgf load cell) so that one part of the separator was fixed to a clip on the upper side of the tensile strength machine while fixing the tape, attached to one side of the separator, to a clip on the lower side, followed by measuring 180° peel strength at a speed of 100 mm/min. The average value thereof was calculated through measurement performed on five or more specimens produced per sample.

[Evaluation Example 2] Dry Adhesion of Separator to Electrode

The separators, manufactured according to Preparation Example 3 using the binder copolymers of Examples 1 to 5 and Comparative Examples 1 and 2, were cut to dimensions of 20 mm in width and 70 mm in length and prepared.

An electrode cut to dimensions of 25 mm in width and 70 mm in length was placed on the prepared specimen and subjected to a temperature of 65°C and a pressure of 500 kg for 10 seconds using a hot press, thereby preparing specimens.

Such manufactured specimen was mounted on a UTM (1 kgf load cell) so that one part of the separator was fixed to a clip on the upper side of the tensile strength machine while fixing the electrode to a clip on the lower side, followed by measuring 180° peel strength at a speed of 100 mm/min. The average value thereof was calculated through measurement performed on five or more specimens produced per sample.

[Evaluation Example 3] Air Permeability of Separator

The time (in seconds) required for 100 cc of air to permeate the separators, manufactured according to Preparation Example 3 using the binder copolymers of Examples 1 to 5, was measured using an air permeability measurement device. Changes in air permeability were calculated on the basis of the air permeability of an uncoated separator.

In other words, the change in air permeability refers to a value obtained by subtracting the air permeability of the uncoated polyolefin separator from the air permeability of the air permeability of the separators, manufactured according to Preparation Example 3 using the binder copolymers of Examples 1 to 5.

[Evaluation Example 4] Electrical Resistance of Separator

The separators, manufactured according to Preparation Example 3 using the binder copolymers of Examples 1 to 5 and Comparative Examples 1 and 2, were punched to a dimension of 18 mm in diameter, followed by assembling CR2032 coin cells composed of graphite serving as a negative electrode and NCM622 serving as a positive electrode.

The assembled coin cell was subjected to formation in an impedance device manufactured by Biologics, Inc., followed by measuring the resistance at a state of charge (SOC) level of 50. The resistance value in the case of using each coated separator was calculated comparatively as a percentage when using the resistance value in the case of using the

uncoated separator as a reference.

The peel adhesion and dry adhesion to the electrode of the separators manufactured according to Preparation Example 3 using the binder copolymers of Examples 1 to 5 and Comparative Examples 1 and 2, as evaluated by Evaluation Examples 1 and 2, are shown in Table 2 below.

[Table 2]

| Copolymer | Peel adhesion (gf/mm) | Dry adhesion to electrode (gf/mm) |
|---|---|---|
| Example 1 | 10.3 | 2.68 |
| Example 2 | 9.8 | 4.06 |
| Example 3 | 7.9 | 1.49 |
| Example 4 | 8.6 | 2.86 |
| Example 5 | 7.7 | 2.25 |
| Comparative Example 1 | 6.1 | 1.38 |
| Comparative Example 2 | 5.4 | 0.59 |

As shown in Table 2, in the case of the separators to which the binder copolymers of Examples 1 to 5 are applied, the peel adhesion fell within the range of 6.5 to 11 gf/mm, and the dry adhesion to the electrode fell within the range of 1.5 to 5.0 gf/mm.

In the meantime, it was confirmed that the separators to which the binder copolymers of Examples 1 to 5, using sodium vinyl sulfonate or 2-(perfluorooctyl)ethyl acrylate containing atoms with high electronegativity as the monomer, are applied had higher peel adhesion and dry adhesion to the electrode than the separators to which the binder copolymers of Comparative Examples 1 and 2, without using sodium vinyl sulfonate or 2-(perfluorooctyl)ethyl acrylate as the monomer, are applied.

It was also confirmed that with the increasing content of sodium vinyl sulfonate or 2-(perfluorooctyl)ethyl acrylate in the binder copolymers, the peel adhesion tended to slightly decrease.

The changes in air permeability of the separators manufactured according to Preparation Example 3 using the binder copolymers of Examples 1 to 5, as evaluated by Evaluation Example 3, are shown in Table 3 below.

[Table 3]

| Copolymer | Air permeability [sec/100 cc] |
|---|---|
| Example 1 | △64 |
| Example 2 | △56 |
| Example 3 | △37 |
| Example 4 | △53 |
| Example 5 | △42 |

As shown in Table 3, in the case of the separators to which the binder copolymers of Examples 1 to 5 are applied, the changes in air permeability fell within the range of △30 sec/100 cc to △65 sec/100cc.

In the meantime, it was confirmed that with the increasing content of sodium vinyl sulfonate or 2-(perfluorooctyl) ethyl acrylate in the binder copolymers, the changes in air permeability compared to that of the uncoated separator tended to decrease.

This is because a higher content of sodium vinyl sulfonate or 2-(perfluorooctyl)ethyl acrylate raises the glass transition temperature of the copolymer, reducing the film formation using the copolymer during the coating of the separator and thus failing to block the pores of the separator.

The resistances of the cells to which the separators manufactured according to Preparation Example 3 using the binder copolymers of Examples 1 to 5 and Comparative Examples 1 and 2 are applied, as evaluated by Evaluation Example 4, are shown in Table 4 below.

[Table 4]

| Copolymer | Resistance (%) |
|---|---|
| Example 1 | -1.363 |
| Example 2 | -1.532 |
| Example 3 | -2.223 |
| Example 4 | +0.842 |
| Example 5 | -1.001 |
| Comparative Example 1 | +3.422 |
| Comparative Example 2 | +2.531 |

As shown in Table 4, in the case of the cells using the separators to which the binder copolymers of Examples 1 to 5 are applied, the electrical resistance fell within the range of -1.0% to 0.9%.

In other words, compared to the cell to which the uncoated separator is applied, the electrical resistances of the cells to which the separators using the binder copolymers of Examples 1 to 5 were applied decreased or slightly increased.

In the meantime, it was confirmed that the cells to which the separator manufactured using the binder copolymers of Examples 1 to 5, using sodium vinyl sulfonate or 2-(perfluorooctyl)ethyl acrylate containing atoms with high electronegativity as the monomer, are applied had lower electrical resistance than the cells to which the separators manufactured using the binder copolymers of Comparative Examples 1 and 2, without using sodium vinyl sulfonate or 2-(perfluorooctyl) ethyl acrylate as the monomer, are applied.

It was also confirmed that with the increasing content of sodium vinyl sulfonate or 2-(perfluorooctyl)ethyl acrylate in the binder copolymers, the electrical resistances of the cells tended to decrease.

Such a decrease in the electrical resistance is due to the improved ionic conductivity in an electrolyte caused by the high electronegativity of sodium vinyl sulfonate or 2-(perfluorooctyl)ethyl acrylate.

In other words, it was confirmed that a copolymer containing a monomer unit with a large dipole moment within the content range of the present application could serve as a binder to manufacture a separator with excellent adhesion.

It was also seen that the separator with excellent properties such as air permeability, heat resistance, and electrical resistance, prepared using the copolymer containing a monomer unit with a large dipole moment within the content range of the present application, could be used to improve secondary battery performance.

The scope of the present disclosure is defined by the appended claims rather than the detailed description presented above. All changes or modifications derived from the meaning and scope of the claims and the concept of equivalents should be construed to fall within the scope of the present disclosure.

## Industrial Applicability

A copolymer of the present disclosure can improve the adhesion of inorganic materials and electrodes to a separator substrate and can improve the heat-resistant properties of a separator by increasing the content of the inorganic materials through high adhesion.

In addition, such improved adhesion can minimize possible failure rates during battery assembly and pore formation.

Furthermore, excellent properties such as air permeability and electrical resistance can be imparted to improve the ionic conductivity in an electrolyte, reaction stability, and life characteristics of a battery.

## Claims

**1.** A copolymer comprising:
with respect to 100 wt% of the total weight of the copolymer, 3 wt% or more and 30 wt% or less of a sulfide group-containing monomer unit, a sulfonate group-containing monomer unit, a sulfone group-containing monomer unit, a fluoro group-containing monomer unit, a perfluoroalkyl group-containing monomer unit, or a combination thereof.

**2.** The copolymer of claim 1, further comprising:
an acrylonitrile-based monomer unit, an acrylate-based monomer unit, an acrylic acid-based monomer unit, a vinyl acetate-based monomer unit, and a styrene-based monomer unit.

**3.** The copolymer of claim 2, wherein the copolymer comprises, with respect to 100 wt% of the total weight of the copolymer, 3 wt% or more and 15 wt% or less of the acrylonitrile-based monomer unit, 40 wt% or more and 70 wt% or less of the acrylate-based monomer unit, 1 wt% or more and 10 wt% or less of the acrylic acid-based monomer unit, 1 wt% or more and 15 wt% or less of the vinyl acetate-based monomer unit, and 10 wt% or more and 30 wt% or less of the styrene-based monomer unit.

**4.** The copolymer of claim 2, wherein the acrylate-based monomer unit is formed by polymerization of one or more selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate,

the acrylic acid-based monomer unit is formed by polymerization of one or more selected from the group consisting of acrylic acid and methacrylic acid, and
the acrylonitrile-based monomer unit is formed by polymerization of one or more selected from the group consisting of acrylonitrile and methacrylonitrile.

**5.** The copolymer of claim 1, wherein the sulfonate group-containing monomer unit is formed by polymerization of sodium vinyl sulfonate, and
the perfluoroalkyl group-containing monomer unit is formed by polymerization of one or more selected from the group consisting of 2-(perfluorooctyl)ethyl acrylate and 2-(perfluorooctyl)ethyl methacrylate.

**6.** The copolymer of claim 2, wherein the acrylic acid-based monomer unit is bonded to an alkali metal.

**7.** The copolymer of claim 1, wherein the copolymer comprises a monomer repeating unit represented by Formula 1 below,

[Formula 1]

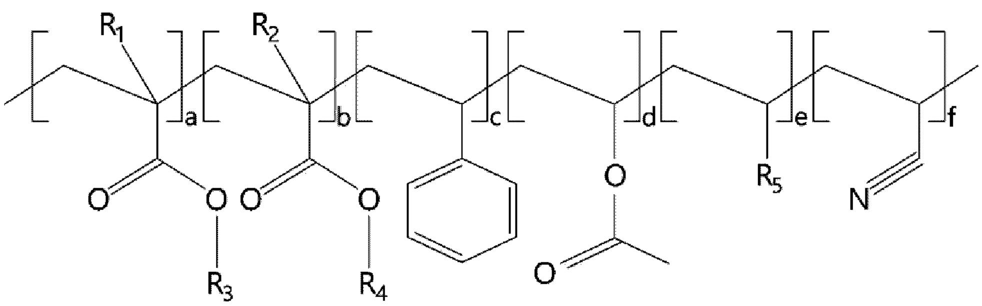

where in Formula 1,

$R_1$ and $R_2$ are each independently hydrogen, a straight-chain or branched-chain hydrocarbon having 1 to 4 carbon atoms, or a combination thereof,
$R_3$ is a straight-chain or branched-chain hydrocarbon having 1 to 20 carbon atoms and containing one or more fluorine atoms,
$R_4$ is hydrogen, an alkali metal, or a straight-chain or branched-chain hydrocarbon having 1 to 20 carbon atoms,
$R_5$ is a sulfide group, a sulfonate group, a sulfone group, a sulfonylester group, a sulfonamide group, a sulfonimide group, a sulfonylazide group, a sulfonylhydrazide group, a sulfonylaziridine group, a sulfonylazetidine group, a sulfonylcarbamate group, a sulfonylurea group, a sulfonylhalide group, or a combination thereof, and

$$a + b + c + d + e + f = 1.$$

(wherein a + e is 0.03 or more and 0.3 or less)

**8.** The copolymer of claim 1, wherein the copolymer is a random or block copolymer.

**9.** A slurry composition comprising:

the copolymer of any one of claims 1 to 8; and
inorganic particles.

**10.** A separator comprising:
the slurry composition of claim 9.

**11.** A secondary battery comprising:
the separator of claim 10.

# INTERNATIONAL SEARCH REPORT

International application No. **PCT/KR2023/016336**

**A. CLASSIFICATION OF SUBJECT MATTER**

**C08F 228/02**(2006.01)i; **C08F 220/24**(2006.01)i; **C08F 220/06**(2006.01)i; **C08F 220/18**(2006.01)i; **C08F 220/44**(2006.01)i; **C08F 220/56**(2006.01)i; **C08F 212/08**(2006.01)i; **C08L 41/00**(2006.01)i; **C08K 3/013**(2018.01)i; **H01M 50/446**(2021.01)i

According to International Patent Classification (IPC) or to both national classification and IPC

**B. FIELDS SEARCHED**

Minimum documentation searched (classification system followed by classification symbols)

C08F 228/02(2006.01); H01M 10/052(2010.01); H01M 10/0566(2010.01); H01M 2/16(2006.01); H01M 50/403(2021.01); H01M 50/451(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 분리막(separator), 공중합체(copolymer), 설파이드기(sulfide group), 설포네이트기(sulfonate group), 설폰기(sulfone group), 플루오로기(fluoro group), 퍼플루오로알킬기(perfluoroalkyl group)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2017-208343 A (SAMSUNG SDI CO., LTD.) 24 November 2017 (2017-11-24)<br>See claims 1-15; and paragraphs [0013]-[0064]. | 1-4,6,8-11<br>5,7 |
| Y | KR 10-2020-0032542 A (SAMSUNG SDI CO., LTD.) 26 March 2020 (2020-03-26)<br>See paragraphs [0030]-[0055]. | 5,7 |
| A | KR 10-2022-0138714 A (SAMSUNG SDI CO., LTD.) 13 October 2022 (2022-10-13)<br>See entire document. | 1-11 |
| A | KR 10-1499284 B1 (ZEON CORPORATION) 05 March 2015 (2015-03-05)<br>See entire document. | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2024** | **02 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/016336**

**C. DOCUMENTS CONSIDERED TO BE RELEVANT**

| Category* | Citation of document, with indication, where appropriate, of the relevant passages | Relevant to claim No. |
|---|---|---|
| A | JP 6579383 B2 (ARAKAWA CHEM. IND. CO., LTD.) 25 September 2019 (2019-09-25) See entire document. | 1-11 |

Form PCT/ISA/210 (second sheet) (July 2022)

**INTERNATIONAL SEARCH REPORT**
**Information on patent family members**

International application No.
**PCT/KR2023/016336**

| Patent document cited in search report | Publication date (day/month/year) | Patent family member(s) | Publication date (day/month/year) |
|---|---|---|---|
| JP 2017-208343 A | 24 November 2017 | CN 107394087 A | 24 November 2017 |
| | | CN 107394087 B | 21 September 2021 |
| | | CN 108963148 A | 07 December 2018 |
| | | CN 108963148 B | 29 October 2021 |
| | | CN 110651381 A | 03 January 2020 |
| | | CN 110651381 B | 17 May 2022 |
| | | EP 3246969 A1 | 22 November 2017 |
| | | EP 3246969 B1 | 12 December 2018 |
| | | EP 3627587 A1 | 25 March 2020 |
| | | EP 3627587 A4 | 03 March 2021 |
| | | EP 3627587 B1 | 19 July 2023 |
| | | JP 2020-521278 A | 16 July 2020 |
| | | JP 6802392 B2 | 16 December 2020 |
| | | JP 7097674 B2 | 08 July 2022 |
| | | KR 10-2017-0129637 A | 27 November 2017 |
| | | KR 10-2017-0129638 A | 27 November 2017 |
| | | KR 10-2017-0129639 A | 27 November 2017 |
| | | KR 10-2017-0129640 A | 27 November 2017 |
| | | KR 10-2017-0129641 A | 27 November 2017 |
| | | KR 10-2017-0129642 A | 27 November 2017 |
| | | KR 10-2017-0129643 A | 27 November 2017 |
| | | KR 10-2017-0129644 A | 27 November 2017 |
| | | KR 10-2017-0129645 A | 27 November 2017 |
| | | KR 10-2041591 B1 | 06 November 2019 |
| | | KR 10-2041592 B1 | 06 November 2019 |
| | | KR 10-2071381 B1 | 30 January 2020 |
| | | KR 10-2071382 B1 | 30 January 2020 |
| | | KR 10-2071383 B1 | 30 January 2020 |
| | | KR 10-2071384 B1 | 30 January 2020 |
| | | KR 10-2071385 B1 | 30 January 2020 |
| | | KR 10-2071386 B1 | 30 January 2020 |
| | | KR 10-2071387 B1 | 30 January 2020 |
| | | US 10840493 B2 | 17 November 2020 |
| | | US 11312871 B2 | 26 April 2022 |
| | | US 11535763 B2 | 27 December 2022 |
| | | US 11584861 B2 | 21 February 2023 |
| | | US 2017-0338461 A1 | 23 November 2017 |
| | | US 2018-0337381 A1 | 22 November 2018 |
| | | US 2020-0119323 A1 | 16 April 2020 |
| | | WO 2018-212566 A1 | 22 November 2018 |
| KR 10-2020-0032542 A | 26 March 2020 | CN 112640195 A | 09 April 2021 |
| | | CN 112640195 B | 14 April 2023 |
| | | EP 3855529 A1 | 28 July 2021 |
| | | EP 3855529 A4 | 15 June 2022 |
| | | JP 2022-503694 A | 12 January 2022 |
| | | JP 7323604 B2 | 08 August 2023 |
| | | KR 10-2021-0111214 A | 10 September 2021 |
| | | KR 10-2335020 B1 | 02 December 2021 |
| | | US 2021-0226299 A1 | 22 July 2021 |
| | | WO 2020-060018 A1 | 26 March 2020 |

Form PCT/ISA/210 (patent family annex) (July 2022)

**INTERNATIONAL SEARCH REPORT**
**Information on patent family members**

International application No.
**PCT/KR2023/016336**

| Patent document cited in search report | Publication date (day/month/year) | Patent family member(s) | Publication date (day/month/year) |
|---|---|---|---|
| KR 10-2022-0138714 A | 13 October 2022 | None | |
| KR 10-1499284 B1 | 05 March 2015 | CN 102334215 A | 25 January 2012 |
| | | CN 102334215 B | 01 July 2015 |
| | | CN 104003927 A | 27 August 2014 |
| | | EP 2372811 A1 | 05 October 2011 |
| | | EP 2372811 A4 | 10 July 2013 |
| | | EP 2372811 B1 | 25 February 2015 |
| | | JP 2012-074202 A1 | 21 June 2012 |
| | | JP 4569718 B2 | 27 October 2010 |
| | | KR 10-2011-0097864 A | 31 August 2011 |
| | | US 2011-0318630 A1 | 29 December 2011 |
| | | WO 2010-074202 A1 | 01 July 2010 |
| JP 6579383 B2 | 25 September 2019 | CN 108305970 A | 20 July 2018 |
| | | CN 108305970 B | 23 November 2021 |
| | | JP 2018-026266 A | 15 February 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101430975
- KR 1020060072065